# FASCICULE DE BREVET EUROPEEN

(11) **EP 2 917 617 B1**
(45) Date de publication et mention de la délivrance du brevet: **11.10.2017**
(21) Numéro de dépôt: 13803116.6
(22) Date de dépôt: 08.11.2013
(51) Int. Cl.: F02M 26/70

(54) **VANNE, NOTAMMENT POUR CIRCUIT D'AIR DE MOTEUR THERMIQUE**
VENTIL, INSBESONDERE FÜR EINEN VERBRENNUNGSMOTOR-LUFTSCHALTKREIS
VALVE, NOTABLY FOR COMBUSTION ENGINE AIR CIRCUIT

(30) Priorité: 12.11.2012 FR 1260715
(43) Date de publication de la demande: 16.09.2015
(73) Titulaire: Valeo Systèmes de Contrôle Moteur, 95800 Cergy (FR)
(72) Inventeur: HODEBOURG, Grégory, F-Sartrouville 78500 (FR)
(74) Mandataire: Garcia, Christine
(86) Numéro de dépôt international: PCT/FR2013/052684
(87) Numéro de publication internationale: WO 2014/072654

(56) Documents cités:
- WO-A2-2011/130015
- GB-A- 839 957
- JP-U- H0 680 959
- US-A- 5 740 785
- US-A1- 2007 017 491
- US-A1- 2007 220 886

## Description

La présente invention concerne une vanne, notamment une vanne pour circuit d'air de moteur thermique.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais). WO2011/130015 décrit une telle vanne. La vanne est ici une vanne dite « trois voies ». Cette vanne est par exemple disposée au niveau d'un embranchement définissant trois voies parcourables par du fluide et elle permet de modifier la communication fluidique entre les trois voies.

Pour assurer l'étanchéité d'une des voies de la vanne, il est connu de disposer un joint dans cette voie, par exemple entre deux pièces de fonderie délimitant cette voie, de sorte qu'un volet de la vanne vienne reposer contre ce joint lorsque ce volet est dans une position s'opposant à la communication fluidique entre cette voie et l'une et/ou l'autre des deux autres voies. Dans ce cas, le joint et le volet sont en appui plan sur plan, de sorte que des fuites relativement importantes peuvent subsister et qu'un encrassement relativement important du joint et du volet se produit.

L'invention a pour but de bénéficier d'une vanne dite « trois voies », notamment pour circuit d'air de moteur thermique, permettant de remédier aux inconvénients ci-dessus.

L'invention y parvient, selon l'un de ses aspects, à l'aide d'une vanne selon la revendication 1, notamment pour circuit d'air de moteur thermique, comprenant, entre autres :
- un corps dans lequel sont ménagés un conduit principal et un conduit auxiliaire débouchant dans le conduit principal,
- un volet monté pivotant dans le corps par un axe, le volet comprenant une première portion, apte à obturer tout ou partie du conduit principal lorsque le volet est dans une première position, et une deuxième portion, apte à obturer tout ou partie du conduit auxiliaire lorsque le volet est dans une deuxième position, et
- au moins un joint porté par l'une au moins de la première et de la deuxième portion du volet et disposé de manière à venir s'interposer entre au moins une zone de ladite portion et au moins une zone du corps lorsque le volet est dans la première ou la deuxième position.

La vanne ci-dessus présente un encrassement réduit. Les fuites peuvent également être réduites lorsque la première, respectivement deuxième, portion du volet obture tout ou partie du premier, respectivement deuxième, conduit.

Au sens de la présente demande « arbre » et « axe » sont synonymes.

Le volet peut être agencé de telle sorte que dans un plan orthogonal à l'axe, l'une des portions est interposée entre l'axe et l'autre portion.

Le volet peut être monté pivotant entre :
- une position ouverte, et
- une position fermée dans laquelle la première portion obture le conduit principal.

De préférence, le joint n'est pas directement en contact avec le corps lorsqu'il est en position ouverte.

De préférence, la deuxième portion obture une partie seulement du conduit auxiliaire lorsque le volet est en position ouverte.

Lors de son déplacement, le volet peut prendre une seule position fermée, dans laquelle le joint vient en contact avec le corps.

La vanne peut être une vanne d'au plus trois voies.

La position fermée, dans laquelle le volet obture le conduit, et la position ouverte peuvent chacune être des positions extrêmes pour le pivotement du volet. Autrement dit, le pivotement du volet entre la position ouverte et la position fermée définit l'amplitude maximale du mouvement en rotation du volet. Selon l'invention, le joint est porté par la deuxième portion du volet et il est disposé de manière à venir s'interposer entre au moins une zone de ladite portion et au moins une zone du corps lorsque le volet est dans la deuxième position. On assure ainsi l'étanchéité du conduit principal vis-à-vis du conduit auxiliaire lorsque le volet est dans la deuxième position.

Dans un autre exemple de mise en oeuvre ne formant pas partie de l'invention, le joint est porté par la première portion du volet et il est disposé de manière à venir s'interposer entre au moins une zone de ladite portion et au moins une zone du corps lorsque le volet est dans la première position. On assure ainsi l'étanchéité d'une partie du conduit principal vis-à-vis du conduit auxiliaire et de l'autre partie du conduit principal lorsque le volet est dans la première position.

Dans un autre exemple de mise en oeuvre de l'invention, un joint est porté par la deuxième portion du volet et il est disposé de manière à venir s'interposer entre au moins une zone de ladite portion et au moins une zone du corps lorsque le volet est dans la deuxième position et un autre joint est porté par la première portion du volet et il est disposé de manière à venir s'interposer entre au moins une zone de ladite portion et au moins une zone du corps lorsque le volet est dans la première position.

Le joint est porté par la première ou la deuxième portion du volet. Il est par exemple fixé à demeure sur ladite portion ou, en variante, il est fixé de façon amovible.

Le joint peut venir au contact du corps lorsque le volet est dans la position dans laquelle le joint est interposé entre une des portions du volet et le corps. Lorsque la première, respectivement deuxième, portion du volet portant le joint se déplace, le joint peut venir racler la paroi du conduit principal, respectivement auxiliaire. De cette façon, l'encrassement dans la vanne peut être réduit.

Le joint est par exemple en inox, ou en silicone.

Le joint peut s'étendre le long de tout ou partie du pourtour de ladite portion du volet.

Le joint peut s'étendre continument sur tout le pourtour de la première ou deuxième portion du volet.

En variante, le joint ne s'étend pas continument. Plusieurs segments distincts de joint peuvent être portés par ladite portion, par exemple le long d'un même pourtour de ladite portion du volet. Plusieurs zones distinctes de la deuxième, respectivement première, portion du volet et du corps sont alors en contact via un des segments de joint lorsque le volet est dans la deuxième, respectivement, première position. Ailleurs qu'au niveau de ces zones, un espace vide peut exister entre le corps et la deuxième, respectivement première, portion du volet quand le volet est dans la deuxième, respectivement première, position.

La première et/ou la deuxième portions peuvent avoir une forme de plaque, c'est-à-dire avoir une dimension, encore appelée « épaisseur » par la suite, très inférieure à leurs deux autres dimensions. Dans ce cas, le joint peut s'étendre continument ou non autour de l'axe le long duquel est mesurée l'épaisseur.

La plaque formant la deuxième, respectivement première, portion peut avoir une forme rectangulaire, auquel cas le joint est rectangulaire quand il s'étend continument autour de la plaque.

En variante, la plaque formant la deuxième, respectivement première, portion peut avoir une forme discoïde, ou demi-discoïde, auquel cas le joint est annulaire ou en partie annulaire quand il s'étend continument autour de la plaque.

Une rainure peut être ménagée sur tout ou partie du pourtour de la première ou deuxième portion et le joint peut reposer en partie dans cette rainure.

Le joint est par exemple inséré à force dans cette rainure et peut faire saillie à l'extérieur de celle-ci une fois en place dans la rainure.

Le volet est déporté radialement par rapport à l'axe. Au sens de la présente invention, « radialement » s'entend dans un plan perpendiculaire à l'axe. L'axe a par exemple dans ce plan une section circulaire et le déport radial peut signifier que le volet ne s'étend pas de la même façon de chaque côté d'un diamètre de l'axe dans ledit plan. Lorsque la portion du volet venant en contact avec l'axe a une forme de plaque, « déporté radialement » peut signifier que le centre de l'axe n'est pas situé à mi-distance entre les faces opposées de la plaque. Selon l'invention, la deuxième portion vient en contact avec l'axe par un premier côté et vient en contact avec la première portion par un deuxième côté opposé au premier côté. La deuxième portion du volet se situe alors entre l'axe et la première portion du volet.

Dans un plan perpendiculaire à l'axe, l'axe peut être plus proche d'une première extrémité du premier côté que d'une deuxième extrémité de ce premier côté, ladite deuxième extrémité étant opposée à la première extrémité. L'axe peut notamment être positionné au niveau de la première extrémité de la deuxième portion. Le positionnement de l'axe par rapport aux extrémités du premier côté de la deuxième portion du volet dans ce plan peut permettre d'assurer un pivotement de grande amplitude du volet dans le corps.

La première portion et la deuxième portion peuvent être des pièces distinctes rigidement couplées entre elles. On peut ainsi utiliser des pièces standard pour réaliser chaque portion du volet. Le couplage entre la première et la deuxième portion afin que ces dernières soient solidaires peut se faire par vissage, soudure ou rivetage par exemple.

Le deuxième côté de la deuxième portion peut être accolé à un premier côté de la première portion et lesdits côtés peuvent s'étendre dans des plans confondus, lorsque lesdits côtés sont plans.

Dans un plan perpendiculaire à l'axe, la première portion du volet peut s'étendre en majeure partie d'un premier côté de l'axe et la deuxième portion du volet peut s'étendre en majeure partie d'un deuxième côté de l'axe, opposé au premier côté.

Un décrochement est par exemple ménagé dans la paroi du conduit auxiliaire et dans la paroi du conduit principal et la première portion peut reposer dans ce décrochement lorsque le volet est dans la deuxième position.

L'invention a encore pour objet, selon un autre de ses aspects, un circuit d'air de moteur thermique comprenant une vanne telle que définie ci-dessus.

La vanne peut être placée dans le circuit d'air à un endroit de ce dernier dans lequel se trouve un embranchement. La vanne se trouve par exemple en aval du moteur, dans le circuit d'échappement du moteur au niveau où prend naissance la boucle de recirculation permettant de réinjecter des gaz d'échappement à l'admission du moteur.

La vanne se trouve en variante en amont du moteur, dans le circuit d'admission du moteur au niveau où débouche la boucle de recirculation des gaz.

La boucle de recirculation des gaz peut être une boucle dite « basse pression » ou « haute pression », selon qu'elle prend naissance en amont ou en aval de la turbine du circuit d'air.

Le moteur thermique est par exemple un moteur à combustion interne, par exemple à essence ou diesel, et il peut être embarqué dans un véhicule automobile.

L'invention porte, selon un autre de ses aspects, sur l'utilisation d'une vanne telle que définie ci-dessus dans un circuit d'air de moteur thermique, le conduit principal appartenant au circuit d'échappement du moteur et le conduit auxiliaire appartenant à une boucle de recirculation des gaz d'échappement permettant auxdits gaz d'échappement d'être réinjectés à l'admission du moteur.

La vanne peut en variante former un doseur ou une vanne papillon.

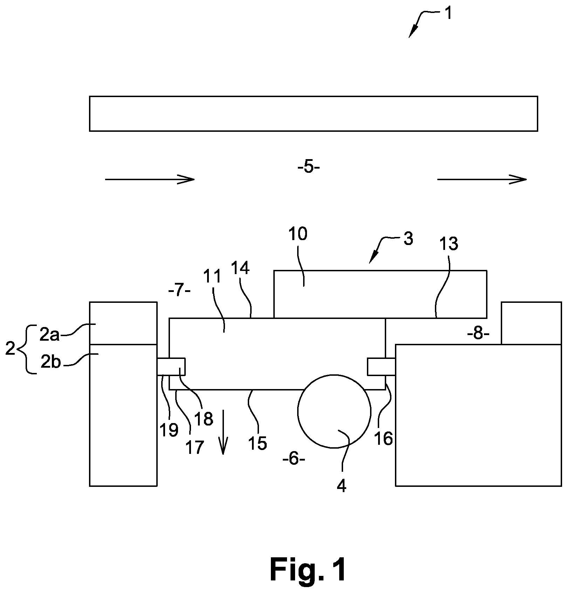

L'invention pourra être mieux comprise à la lecture de la description qui va suivre d'un exemple non limitatif de mise en oeuvre de celle-ci et à l'examen du dessin annexé sur lequel la figure unique représente de façon schématique un exemple de vanne dite « trois voies » selon l'invention.

Sur cette figure est représentée une vanne 1 dite « trois voies ». La vanne 1 comprend un corps 2 et un volet 3 mobile dans le corps 2 via un axe 4. L'axe 4 présente dans cet exemple une section transversale circulaire.

Dans le corps 2 est ménagé un conduit principal 5 auquel se raccorde un conduit auxiliaire 6 au niveau d'un embranchement 7. Le corps 2 est par exemple réalisé en fonderie, en aluminium ou en inox.

Dans l'exemple considéré, le corps 2 comporte une première pièce 2a définissant :
- la paroi du conduit principal 5, et
- la paroi du conduit auxiliaire 6 au niveau de l'embranchement 7.

Le corps 2 comporte également une deuxième pièce 2b définissant la paroi du conduit auxiliaire 6 ailleurs qu'au niveau de l'embranchement 7.

Comme représenté sur la figure, une cavité 8 existe dans la première pièce 2a, à proximité de l'embranchement 7.

Dans l'exemple considéré, le conduit principal 5 fait partie du circuit d'échappement d'un moteur thermique de véhicule et le conduit auxiliaire 6 fait partie d'une boucle de recirculation permettant aux gaz d'échappement d'être réinjectés à l'admission du moteur. La vanne 1 permet ainsi de faire recirculer une quantité variable de gaz d'échappement vers l'admission du moteur thermique.

On va maintenant décrire plus en détail le volet 3. Le volet 3 comprend ici une première portion 10 et une deuxième portion 11. Chacune de ces portions 10 ou 11 a dans l'exemple décrit une forme de plaque. Dans le plan de la figure, perpendiculaire à l'axe, ces portions 10, 11 ont un contour rectangulaire.

La première portion 10 et la deuxième portion 11 sont ici rigidement couplées entre elles, par exemple par vissage, soudure ou rivetage.

La première portion 10 comporte une première face 13 venant en contact avec une deuxième face 14 de la deuxième portion 11. Dans l'exemple considéré, les faces 13 et 14 sont planes et coplanaires.

La deuxième portion présente une première face 15 opposée à la deuxième face 14. La deuxième portion 11 vient en contact par la première face 15 avec l'axe 4. Comme représenté sur la figure, la deuxième portion 11 est radialement décentrée par rapport à l'axe 4, ne passant pas par une zone centrale de l'axe 4. En outre, l'axe 4 est dans cet exemple plus proche d'une extrémité 16 de la première face 15 que de l'autre extrémité 17 de ladite face 15, lorsqu'observé dans le plan de la figure, c'est-à-dire perpendiculairement à l'axe 4.

La deuxième portion 11 et l'axe 4 peuvent être solidarisés ensemble sans jeu subsistant.

Dans l'exemple illustré, une rainure 18 est ménagée tout autour de la direction le long de laquelle est mesurée l'épaisseur de la plaque formant la deuxième portion 12. Un joint 19 est disposé dans cette rainure 18.

En variante, une pluralité de segments de joint peut être reçue dans la rainure 18 ou dans une pluralité de rainures correspondantes.

Le joint 19 présente, comme on peut le voir sur la figure, une portion disposée dans la rainure 18 et une portion faisant saillie au-delà de la rainure 18 et au-delà de la deuxième portion 11.

La première portion 10 se déplace entre une deuxième position dans laquelle elle repose en partie dans la cavité 8, étant alors sensiblement parallèle à la paroi du conduit principal 5 au niveau de l'embranchement 7, et une première position dans laquelle elle s'étend à travers le conduit principal 5. Dans l'exemple décrit, dans cette première position, la première portion 10 n'obture pas le conduit principal mais assure une contre-pression vers l'échappement.

La deuxième portion 11 se déplace entre une première position dans laquelle elle s'étend sensiblement parallèlement à la paroi du conduit auxiliaire 6 au niveau de l'embranchement 7 et une deuxième position dans laquelle elle s'étend en travers du conduit auxiliaire 6, étant notamment perpendiculaire à la paroi du conduit auxiliaire 6 au niveau de l'embranchement 7.

Lorsque la première 10 et la deuxième 11 portion sont dans la première position, le volet 3 est dans la première position dans laquelle il favorise la recirculation de gaz d'échappement vers l'admission du moteur.

Lorsque la première 10 et la deuxième 11 portion sont dans la deuxième position, le volet 3 est dans la deuxième position dans laquelle il s'oppose, voire empêche, la recirculation de gaz d'échappement vers l'admission du moteur. Le joint 19 est dimensionné de sorte à combler l'espace vide entre la deuxième portion 11 et la paroi du conduit auxiliaire 6 lorsque le volet est dans la deuxième position, afin d'assurer l'étanchéité du conduit auxiliaire 6 vis-à-vis du conduit principal 5.

L'invention n'est pas limitée à l'exemple qui vient d'être décrit.

Dans d'autres exemples de mise en oeuvre de l'invention, plusieurs joints peuvent être portés par la deuxième portion 11. Ces joints sont par exemple positionnés à des hauteurs différentes le long de la direction selon laquelle est mesurée l'épaisseur de la plaque.

Chaque joint peut alors s'étendre continument autour de ladite direction. En variante, chaque joint est formé par des segments de joint. Dans ce cas, d'un joint à l'autre, les segments de joint peuvent être exactement superposés ou être disposés en quinconces l'un par rapport à l'autre.

L'expression « comprenant un » doit être comprise comme synonyme de l'expression « comprenant au moins un », sauf lorsque le contraire est spécifié.

## Revendications

1. Vanne (1), notamment pour circuit d'air de moteur thermique, comprenant :
- un corps (2a, 2b) dans lequel sont ménagés un conduit principal (5) et un conduit auxiliaire (6) débouchant dans le conduit principal (5),
- un volet (3) monté pivotant dans le corps (2a, 2b) par un axe (4), le volet (3) étant déporté radialement par rapport à l'axe (4), le volet (3) comprenant une première portion (10), apte à obturer tout ou partie du conduit principal (5) lorsque le volet (3) est dans une première position, et une deuxième portion (11), apte à obturer tout ou partie du conduit auxiliaire (6), lorsque le volet (3) est dans une deuxième position, la vanne étant **caractérisée en ce qu'**elle comprend
- un joint (19) porté par la deuxième portion (11) du volet et disposé de manière à venir s'interposer entre au moins une zone de ladite deuxième portion (11) et au moins une zone du corps lorsque le volet (3) est dans deuxième position, le joint (19) s'étendant le long de tout ou partie du pourtour de ladite deuxième portion (11) du volet, la deuxième portion (11) venant en contact avec l'axe (4) par un premier côté (15) et venant en contact avec la première portion (10) par un deuxième côté (14) opposé au premier côté (15).

2. Vanne selon la revendication 1, dans un plan perpendiculaire à l'axe (4), l'axe étant plus proche d'une première extrémité (16) du premier côté (15) que d'une deuxième extrémité (17) du premier côté (15), ladite deuxième extrémité étant opposée à la première extrémité.

3. Vanne selon la revendication 1 ou 2, la première portion (10) et la deuxième portion (11) étant des pièces distinctes rigidement couplées entre elles.

4. Vanne selon la revendication 4, le deuxième côté (14) de la deuxième portion (11) étant accolé à un premier côté (13) de la première portion (10) et lesdits côtés s'étendant dans des plans confondus.

5. Vanne selon l'une quelconque des revendications précédentes, dans un plan perpendiculaire à l'axe, la première portion (10) s'étendant en majeure partie d'un premier côté de l'axe (4) et la deuxième portion (11) du volet s'étendant en majeure partie d'un deuxième côté de l'axe (4) opposé au premier côté.

6. Vanne selon l'une quelconque des revendications précédentes, le volet (3) étant monté pivotant entre :
- une position ouverte, et
- une position fermée dans laquelle la première portion (10) obture le conduit principal (5).

7. Vanne selon la revendication précédente, étant configurée de manière à ce que, lors de son déplacement, le volet (3) prenne une seule position fermée, dans laquelle le joint (19) vient en contact avec le corps (2a, 2b).

8. Vanne selon l'une des revendications 6 ou 7, la position ouverte et la position fermée étant chacune des positions extrêmes pour le pivotement du volet (3).

9. Utilisation d'une vanne (1) selon l'une quelconque des revendications précédentes dans un circuit d'air de moteur thermique, le conduit principal (5) appartenant au circuit d'échappement du moteur et le conduit auxiliaire (6) appartenant à une boucle de recirculation des gaz d'échappement permettant auxdits gaz d'échappement d'être réinjectés en entrée du moteur.

## Patentansprüche

1. Ventil (1), insbesondere für ein Luftsystem eines Verbrennungsmotors, welches umfasst:
- einen Körper (2a, 2b), in welchem eine Hauptleitung (5) und eine Hilfsleitung (6), die in die Hauptleitung (5) mündet, ausgebildet sind;
- eine Klappe (3), die mittels einer Achse (4) schwenkbar in dem Körper (2a, 2b) gelagert ist, wobei die Klappe (3) radial bezüglich der Achse (4) verschoben ist, wobei die Klappe (3) einen ersten Abschnitt (10), der geeignet ist, die Hauptleitung (5) ganz oder teilweise zu verschließen, wenn sich die Klappe (3) in einer ersten Position befindet, und einen zweiten Abschnitt (11), der geeignet ist, die Hilfsleitung (6) ganz oder teilweise zu verschließen, wenn sich die Klappe (3) in einer zweiten Position befindet, umfasst,
wobei das Ventil **dadurch gekennzeichnet ist, dass** es umfasst:
- eine Dichtung (19), die von dem zweiten Abschnitt (11) der Klappe getragen wird und derart angeordnet ist, dass sie zwischen wenigstens einen Bereich des zweiten Abschnitts (11) und wenigstens einen Bereich des Körpers gelangt, wenn sich die Klappe (3) in der zweiten Position befindet, wobei sich die Dichtung (19) entlang des gesamten Außenumfangs des zweiten Abschnitts (11) der Klappe oder eines Teils davon erstreckt,
wobei der zweite Abschnitt (11) mit der Achse (4) über eine erste Seite (15) in Kontakt kommt und mit dem ersten Abschnitt (10) über eine zweite Seite (14), die der ersten Seite (15) gegenüberliegt, in Kontakt kommt.

2. Ventil nach Anspruch 1, wobei in einer zur Achse (4) senkrechten Ebene die Achse näher an einem ersten Ende (16) der ersten Seite (15) als an einem zweiten Ende (17) der ersten Seite (15) ist, wobei das zweite Ende dem ersten Ende gegenüberliegt.

3. Ventil nach Anspruch 1 oder 2, wobei der erste Abschnitt (10) und der zweite Abschnitt (11) verschiedene Teile sind, die starr miteinander gekoppelt sind.

4. Ventil nach Anspruch 4, wobei die zweite Seite (14) des ersten Abschnitts (11) an einer ersten Seite (13) des ersten Abschnitts (10) anliegt und diese Seiten sich in zusammenfallenden Ebenen erstrecken.

5. Ventil nach einem der vorhergehenden Ansprüche, wobei in einer zur Achse senkrechten Ebene der erste Abschnitt (10) sich zum größten Teil auf einer ersten Seite der Achse (4) erstreckt und der zweite Abschnitt (11) der Klappe sich zum größten Teil auf einer zweiten Seite der Achse (4) erstreckt, die der ersten Seite gegenüberliegt.

6. Ventil nach einem der vorhergehenden Ansprüche, wobei die Klappe (3) schwenkbar gelagert ist zwischen:
- einer geöffneten Position und
- einer geschlossenen Position, in welcher der erste Abschnitt (10) die Hauptleitung (5) verschließt.

7. Ventil nach einem der vorhergehenden Ansprüche, welches derart ausgebildet ist, dass die Klappe (3) bei ihrer Verlagerung eine einzige geschlossene Position einnimmt, in welcher die Dichtung (19) mit dem Körper (2a, 2b) in Kontakt kommt.

8. Ventil nach einem der Ansprüche 6 oder 7, wobei die geöffnete Position und die geschlossene Position jeweils Endpositionen für die Schwenkung der Klappe (3) sind.

9. Verwendung eines Ventils (1) nach einem der vorhergehenden Ansprüche in einem Luftsystem eines Verbrennungsmotors, wobei die Hauptleitung (5) zum Abgassystem des Motors gehört und die Hilfsleitung (6) zu einer Abgasrückführungsschleife gehört, die ermöglicht, dass die Abgase am Eingang das Motors wieder eingeleitet werden.

## Claims

1. Valve (1), in particular for a combustion engine air circuit, comprising:
- a body (2a, 2b) in which there are formed a main duct (5) and an auxiliary duct (6) opening into the main duct (5),
- a shutter (3) pivotably mounted in the body (2a, 2b) by means of a spindle (4), the shutter (3) being offset radially with respect to the spindle (4), the shutter (3) comprising a first portion (10) able to close off all or part of the main duct (5) when the shutter (3) is in a first position, and a second portion (11) able to close off all or part of the auxiliary duct (6) when the shutter (3) is in a second position, the valve being **characterized in that** it comprises
- a seal (19) borne by the second portion (11) of the shutter and arranged so as to be interposed between at least one zone of said second portion (11) and at least one zone of the body when the shutter (3) is in the second position, the seal (19) extending along all or part of the periphery of said second portion (11) of the shutter, the second portion (11) coming into contact with the spindle (4) by a first side (15) and coming into contact with the first portion (10) by a second side (14) opposite to the first side (15).

2. Valve according to Claim 1, in a plane perpendicular to the spindle (4), the spindle being closer to a first end (16) of the first side (15) than to a second end (17) of the first side (15), said second end being opposite to the first end.

3. Valve according to Claim 1 or 2, the first portion (10) and the second portion (7) being separate parts which are rigidly coupled to one another.

4. Valve according to Claim 4, the second side (14) of the second portion (11) being juxtaposed with a first side (13) of the first portion (10) and said sides extending in coincident planes.

5. Valve according to any one of the preceding claims, in a plane perpendicular to the spindle, the first portion (10) extending for the most part on a first side of the spindle (4) and the second portion (11) of the shutter extending for the most part on a second side of the spindle (4) opposite to the first side.

6. Valve according to any one of the preceding claims, the shutter (3) being pivotably mounted between:
- an open position, and
- a closed position in which the first portion (10) closes off the main duct (5).

7. Valve according to the preceding claim, being configured so that, during its movement, the shutter (3) assumes only one closed position in which the seal (19) comes into contact with the body (2a, 2b).

8. Valve according to either of Claims 6 and 7, the open position and the closed position each being end positions for the pivoting of the shutter (3).

9. Use of a valve (1) according to any one of the preceding claims in a combustion engine air circuit, the main duct (5) belonging to the engine exhaust circuit and the auxiliary duct (6) belonging to an exhaust-gas recirculation loop allowing said exhaust gases to be re-injected at the intake of the engine.
